# FASCICULE DE BREVET EUROPEEN

(11) **EP 2 928 769 B1**
(45) Date de publication et mention de la délivrance du brevet: **08.02.2017**
(21) Numéro de dépôt: 13815063.6
(22) Date de dépôt: 05.12.2013
(51) Int. Cl.: B64C 11/18, B64C 27/467, F01D 5/14

(54) **PALE D'HELICE POUR TURBOMACHINE**
PROPELLERBLATT FÜR TURBOTRIEBWERK
PROPELLER BLADE FOR TURBO ENGINE

(30) Priorité: 07.12.2012 FR 1261805
(43) Date de publication de la demande: 14.10.2015
(73) Titulaire: Snecma, 75015 Paris (FR)
(72) Inventeur: VLASTUIN, Jonathan, F-77550 Moissy Cramayel Cedex (FR); DEJEU, Clément, Marcel, Maurice, F-77550 Moissy Cramayel Cedex (FR)
(74) Mandataire: Jolly, Christophe
(86) Numéro de dépôt international: PCT/FR2013/052962
(87) Numéro de publication internationale: WO 2014/087109

(56) Documents cités:
- WO-A1-2012/080669
- WO-A1-2012/140385
- US-A1- 2010 124 500
- US-B1- 6 341 942

## Description

La présente invention concerne une pale d'hélice pour une turbomachine ainsi qu'une hélice non carénée comprenant une pluralité de pale et une turbomachine équipée d'une telle hélice.

Une turbomachine de ce type comprend deux hélices externes coaxiales et contrarotatives, respectivement amont et aval, qui sont entraînées en rotation par une turbine de la turbomachine et qui s'étendent sensiblement radialement à l'extérieur de la nacelle de la turbomachine.

Ce type de turbomachine à deux hélices contrarotatives non carénées présente un potentiel très important de diminution de la consommation de carburant par rapport aux turboréacteurs à double flux actuels. Toutefois, ces dispositifs à hélices rapides coaxiales, contrarotatives et non carénées présentent l'inconvénient d'émissions sonores relativement élevées.

Un des principaux facteurs contribuant à ces émissions sonores réside dans l'interaction entre les hélices contrarotatives, et en particulier dans l'impact des tourbillons de tête de pale de la première hélice, emportés dans le sens d'écoulement du fluide propulsif, contre les pales de la deuxième hélice en aval.

Pour remédier à cet inconvénient, il a été proposé de réduire la dimension radiale de la seconde hélice de façon à ce que les tourbillons générés par les pales de la première hélice passent radialement à l'extérieur des bouts de pales de la seconde hélice aval. Cette solution induit une réduction du rendement propulsif qui n'est pas souhaitable.

Dans une autre solution proposée dans le document FR2935349, un flux d'air est injecté dans les pales de la première hélice et débouche en tête de pale de manière à affaiblir le tourbillon généré par la première hélice. Dans encore une autre solution décrite dans le document EP2287072, l'air débouchant en tête de pale génère un second tourbillon co-rotatif avec le premier tourbillon et apte à déstabiliser par friction le premier tourbillon.

Dans les documents FR1153315 et WO 2012/140385 de la demanderesse, il a été proposé de faire varier l'inclinaison du bord d'attaque par rapport à une direction radiale de manière à ce que celle-ci passe par un maximum local dans la partie supérieure de la pale. Cette forme particulière du bord d'attaque de la pale permet de générer un second tourbillon tournant dans le même sens que le tourbillon de tête de pale. Ce second tourbillon se propage sur la face d'extrados de la pale vers l'aval et radialement vers l'extérieur puis interagit avec le tourbillon formé en tête de pale. La friction mutuelle des deux tourbillons dissipe leur énergie et les déstabilise, permettant une réduction des émissions sonores qui sont particulièrement importantes au décollage du fait des vitesses de rotation importantes des hélices.

Toutefois, le second tourbillon est généré en permanence et diminue les performances aérodynamiques et propulsives des deux hélices contra-rotatives sur toutes les phases de vol et en particulier en régime de croisière.

Enfin, il est connu du document WO2012/080669 de la demanderesse de former un renfoncement sur la face d'extrados d'une aube de turbine de manière à réduire le tourbillon formé entre l'extrémité de l'aube de turbine et un carter externe.

La présente invention a pour but d'améliorer le rendement propulsif d'une pale d'hélice sur toute sa plage de fonctionnement tout en limitant les nuisances sonores dues à la formation de tourbillons.

A cette fin, elle propose une pale destinée à être montée sur une hélice, s'étendant radialement suivant une hauteur depuis un pied de pale jusqu'à une tête de pale, et comprenant un bord d'attaque et un bord de fuite, ainsi qu'une face d'intrados et une face d'extrados, caractérisée en ce que, le long du bord d'attaque, l'angle entre d'une part la direction radiale de la pale correspondant à la direction radiale de l'hélice sur laquelle la pale est destinée à être montée, et d'autre part une tangente au bord d'attaque, passe par un maximum local zₘₐₓ situé entre 60 et 80 % de la hauteur de pale et en ce que la face d'extrados de la pale comprend un renfoncement à surface concave s'étendant axialement depuis le bord d'attaque jusqu'au bord de fuite et localisé sur la hauteur de pale entre le maximum local zₘₐₓ et la tête de pale, de manière à former une inversion de courbure de la pale en direction radiale.

L'inclinaison du bord d'attaque situé entre 60 et 80% de la hauteur de la pale permet d'induire la formation d'un second tourbillon en plus du premier tourbillon généré en tête de pale. Ce second tourbillon généralement corotatif par rapport au premier tourbillon se développe sur la face d'extrados de la pale et est guidé dans le renfoncement concave de la face d'extrados de la pale. L'intégration d'un renfoncement concave à la pale permet à faible vitesse de déplacement de l'avion, par exemple au décollage à environ 0,2 Mach, de guider le second tourbillon jusqu'en aval de la pale. A la différence de la technique antérieure, le second tourbillon interagit avec le premier tourbillon en aval de la pale, ce qui conduit à une meilleure interaction des premier et second tourbillons et permet ainsi de réduire les nuisances acoustiques émises à proximité du sol.

A vitesse de croisière, par exemple environ 0,7 Mach, les lignes de flux d'air sur la face d'extrados de la pale sont sensiblement parallèles, ce qui indique qu'aucun tourbillon secondaire n'est généré sur la face d'extrados. Il s'ensuit que le rendement propulsif de l'hélice est amélioré en vitesse de croisière.

L'invention permet ainsi de combiner l'avantage d'une réduction des nuisances sonores lorsque les pales tournent à haute vitesse avec un bon rendement propulsif en vitesse de croisière.

Avantageusement, le maximum local précité est situé à environ 70% de la hauteur de pale.

Dans une réalisation préférée de l'invention, le renfoncement a une largeur, mesurée selon la hauteur de pale, qui est comprise entre 15 et 20% de la hauteur de pale.

Le fond du renfoncement est avantageusement positionné entre 75 et 90 % de la hauteur de la pale.

Selon une autre caractéristique de l'invention, le renfoncement a une profondeur, mesurée dans une direction tangentielle, qui croit du bord d'attaque vers le bord de fuite, ce qui permet de mieux guider le second tourbillon vers le premier tourbillon et d'améliorer leur interaction en aval de la pale.

L'invention concerne également une hélice non carénée pour une turbomachine, comprenant une pluralité de pales du type décrit ci-dessus, ces pales étant régulièrement réparties autour de l'axe de l'hélice.

L'invention concerne encore une turbomachine, telle qu'un turbopropulseur ou un turboréacteur d'avion, comprenant au moins une hélice non carénée du type décrit précédemment.

D'autres avantages et caractéristiques de l'invention apparaîtront à la lecture de la description suivante faite à titre d'exemple non limitatif et en référence aux dessins annexés dans lesquels :
- la figure 1 est une vue schématique en coupe axiale d'une turbomachine à hélices non carénées ;
- la figure 2A est une représentation schématique en perspective d'une pale selon l'invention et vue selon une direction orientée vers la face d'intrados de la pale ;
- la figure 2B est une représentation schématique en perspective d'une pale selon l'invention depuis le bord d'attaque ;
- la figure 2C est une représentation schématique en perspective d'une pale selon l'invention depuis le bord de fuite ;
- la figure 2D est une représentation schématique en coupe radiale d'une partie de la pale selon l'invention, proche de la tête de pâle ;
- la figure 3 est une représentation schématique de la formation de deux tourbillons et leur interaction ;
- la figure 4 est une vue schématique depuis l'amont et vers l'aval de l'interaction de deux tourbillons générés par la pale selon l'invention ;
- la figure 5 représente les lignes de flux d'air sur la face d'extrados de la pale lors d'une phase de croisière ;
- la figure 6 est un graphe représentant l'évolution sur la hauteur de la pale de l'angle d'incidence de l'air par rapport à la corde de la pale et mesurée au niveau du bord d'attaque de la pale, en fonctionnement en régime de croisière ;
- la figure 7 est un graphe représentant l'évolution sur la hauteur de la pale de l'angle d'incidence de l'air par rapport à la corde de la pale et mesurée au niveau du bord d'attaque de la pale en fonctionnement à un régime correspondant au décollage ;
- la figure 8 est un graphe représentant l'évolution du coefficient de finesse sur la hauteur de la pale, en régime de croisière.

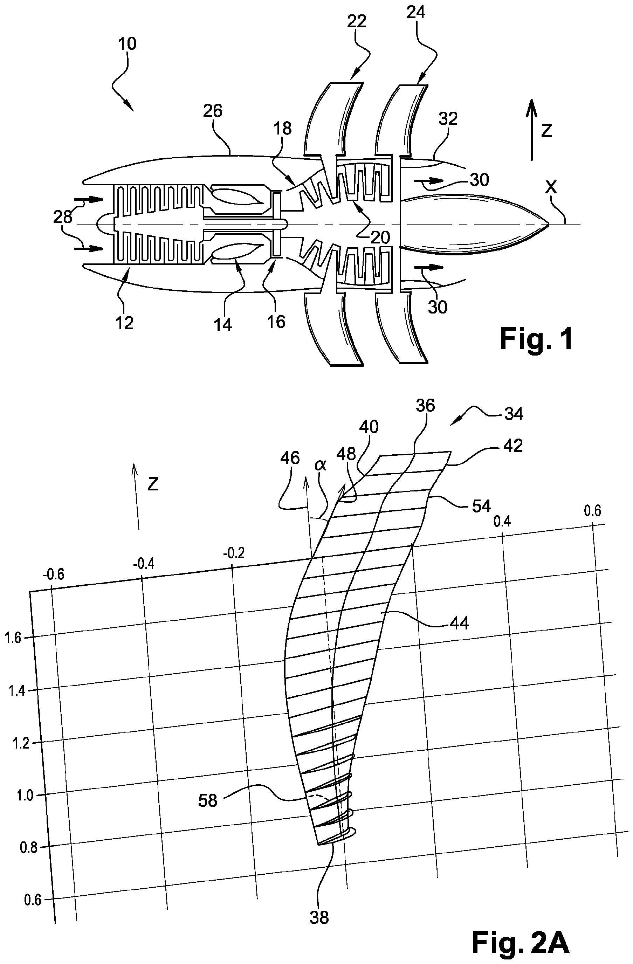

On se réfère tout d'abord à la figure 1 représentant une turbomachine 10 à hélices non carénées connue sous l'acronyme anglais « open rotor » ou « unducted fan » qui comporte d'amont en aval, dans le sens d'écoulement des gaz à l'intérieur de la turbomachine, un compresseur 12, une chambre annulaire de combustion 14, une turbine haute-pression 16, et deux turbines basse-pression 18, 20 qui sont contrarotatives, c'est-à-dire qui tournent dans deux sens opposés autour de l'axe longitudinal X de la turbomachine.

Chacune de ces turbines aval 18, 20 entraîne en rotation une hélice externe 22, 24 s'étendant radialement à l'extérieur de la nacelle 26 de la turbomachine, cette nacelle 26 étant sensiblement cylindrique et s'étendant le long de l'axe X autour du compresseur 12, de la chambre de combustion 14, et des turbines 16, 18 et 20.

Le flux d'air 28 qui pénètre dans la turbomachine est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe X de la turbomachine. Ces pales s'étendent sensiblement radialement et sont avantageusement à calage variable, c'est-à-dire qu'elles peuvent tourner autour de leurs axes de façon à optimiser leurs positions angulaires en fonction des conditions de fonctionnement de la turbomachine.

Dans la configuration représentée en figure 1, la turbomachine est dite à configuration « pousseur ». Alternativement, dans une configuration dite « tracteur » (non représentée), les hélices 22, 24 sont situées en amont de la nacelle.

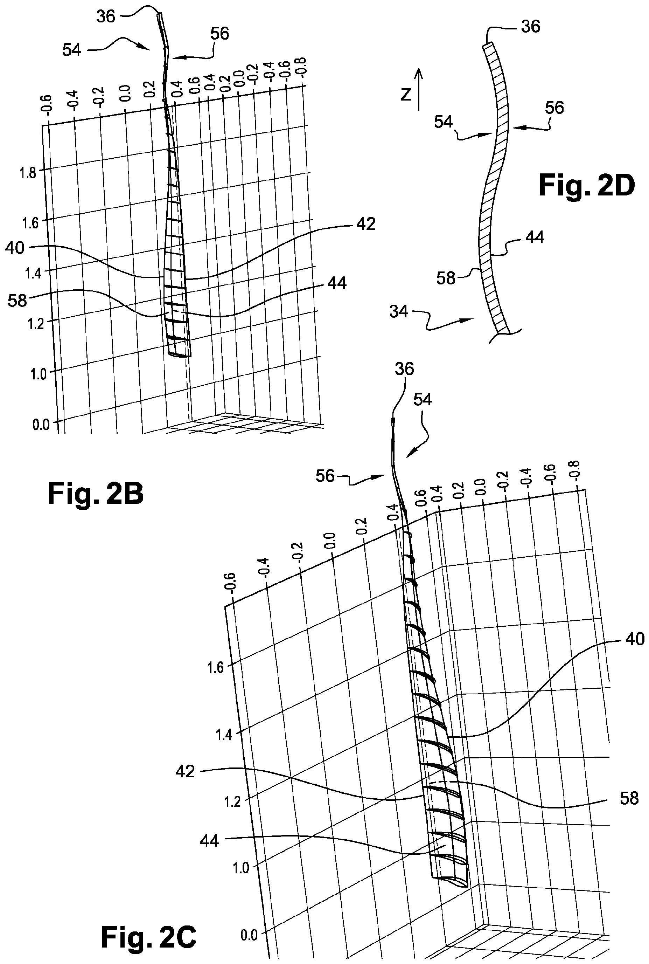

La figure 2A représente une pale 34 selon l'invention s'étendant radialement selon une direction Z entre une tête de pale 36 et un pied de pale 38, longitudinalement entre un bord d'attaque 40 et un bord de fuite 42 et tangentiellement entre une face d'intrados 44 et une face d'extrados 58, seule la face d'extrados étant visible sur la figure 2. La direction Z est une direction radiale de la pale qui équivaut à une direction perpendiculaire à l'axe X de rotation de l'hélice lorsque la pale y est montée.

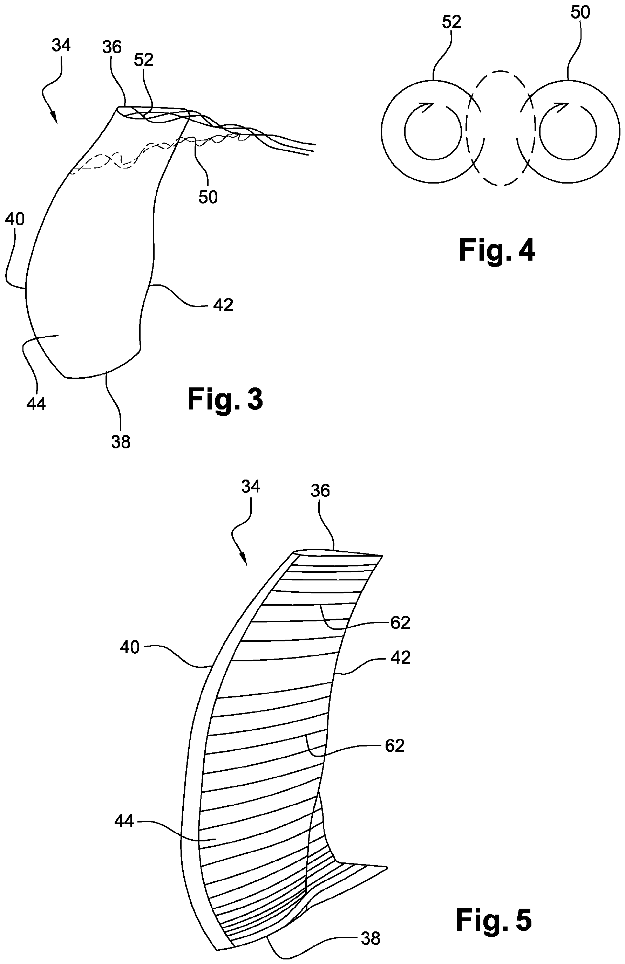

Comme représenté en figure 2A, l'angle α entre la direction radiale 46 et une tangente 48 au bord d'attaque 40 passe par un maximum local situé entre environ 60 et 80 % de la hauteur de pale, ce qui permet de générer un second tourbillon 50 apte à interagir avec un premier tourbillon 52 généré au niveau de la tête de pale 36. Les premier et second tourbillons 50, 52 sont représentés sur les figures 3 et 4. Le second tourbillon 50 s'écoule sur la face d'extrados 58 de la pale 34 (figure 3) et tourne dans le même sens que le premier tourbillon 52. La friction mutuelle des deux tourbillons 50, 52 dissipe leur énergie et les déstabilise, permettant une réduction des émissions sonores.

Dans une réalisation particulière de l'invention, le maximum local de l'angle α est situé à environ 75% de la hauteur de pale.

Selon l'invention, la face d'extrados 58 de la pale 34 comprend également un renfoncement 54 de forme concave s'étendant axialement depuis le bord d'attaque 40 jusqu'au bord de fuite 42 et localisé sur la hauteur de la pale 34 entre le maximum local zₘₐₓ et la tête de pale 36 (figure 2A). Ce renfoncement 54 de forme concave de la face d'extrados 58 est formé en vis-à-vis d'un renflement 56 de forme convexe de la face d'intrados 44 de la pale 34. Par ailleurs, le renfoncement 54 et le renflement 56 présentent des profils similaires. Ainsi, comme illustré en figure 2D, lorsque la face d'extrados 58, dans un sens d'extension radial allant vers la tête de pale, présente une première courbure suivie d'une seconde courbure dans un sens opposé, définissant alors le renfoncement 54, la face d'intrados 44 présente pareillement une première courbure suivie d'une seconde courbure dans un sens opposé définissant le renflement 56. De cette manière, la pale 34 présente dans son allure générale une inversion de courbure en direction radiale localisée sur la hauteur entre le maximum local zₘₐₓ et la tête de pale 36.

La largeur du renfoncement 54, mesurée selon la hauteur de la pale 34, est sensiblement constante et est de l'ordre de 15 à 20 % de la hauteur de la pale 34.

Le fond du renfoncement 54 est positionné entre environ 75 et 90 % de la hauteur de la pale 34.

La pale 34 selon l'invention permet ainsi d'avoir un bon guidage du second tourbillon, généré au niveau de la cassure à la hauteur zₘₐₓ, dans le renfoncement concave 54 de la face d'extrados de la pale 34.

L'intégration d'un renfoncement concave 54 à la pale permet à faible vitesse, par exemple au décollage à environ 0,2 Mach, de guider le second tourbillon 50 jusqu'en aval de la pale où il interagit avec le premier tourbillon 52 de tête de pale 36, conduisant à une réduction des nuisances acoustiques émises à proximité du sol (figure 3) par rapport à la technique antérieure où l'interaction entre les premier et second tourbillons se produit axialement entre le bord d'attaque et le bord de fuite.

A vitesse de croisière, par exemple environ 0,7 Mach, les lignes 62 de flux d'air sur la face d'extrados de la pale 34 sont sensiblement parallèles, ce qui indique qu'aucun tourbillon secondaire n'est généré sur la face d'extrados de la pale 34. Il s'ensuit que le rendement propulsif de l'hélice est amélioré (figure 5).

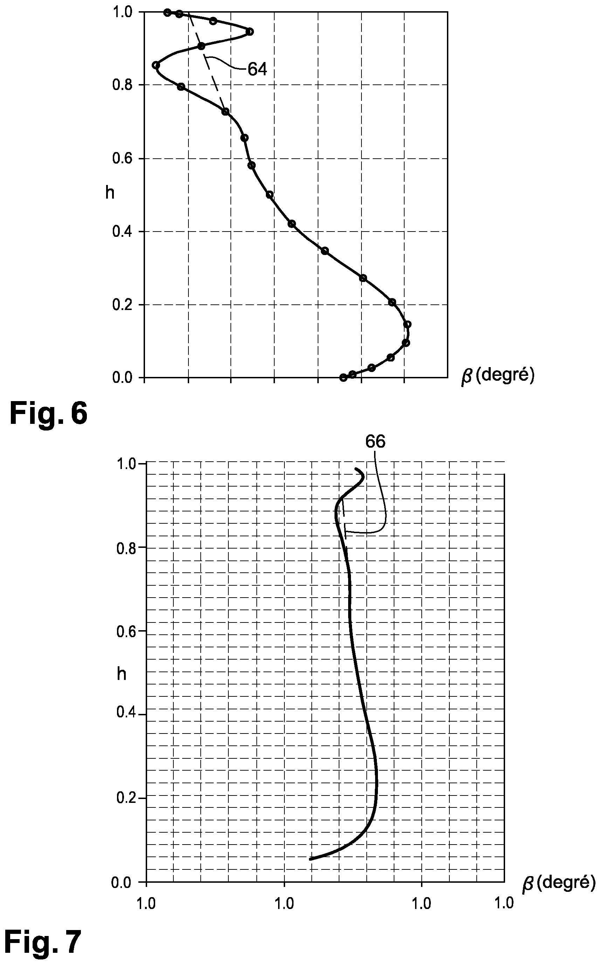

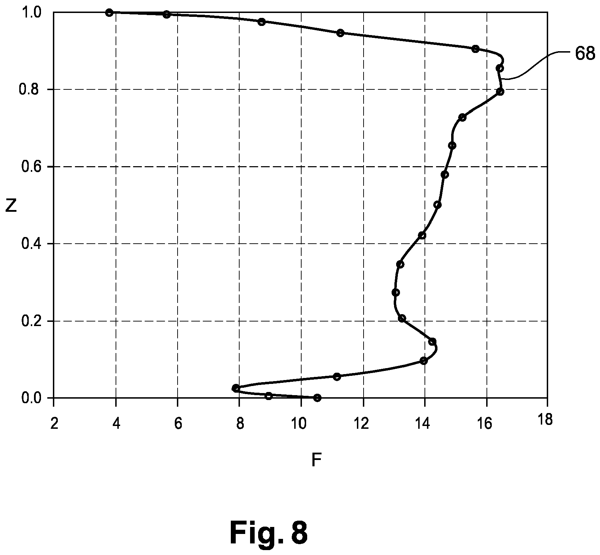

La figure 6 représente l'évolution sur la hauteur de la pale de l'angle β d'incidence de l'air par rapport à la corde de la pale, en fonctionnement en régime de croisière. Cet angle est mesuré sur toute la hauteur h de la pale 34. La figure 7 représente une courbe similaire à celle de la figure 8 mais en fonctionnement à un régime correspondant au décollage. Sur les figures 8 et 9, la hauteur est normalisée par rapport à la hauteur totale de la pale.

Sur la figure 6, au régime de croisière, on observe qu'entre 75 et 90 % de la hauteur de la pale correspondant à la position du renfoncement concave, l'angle d'incidence diminue par rapport à l'angle d'incidence représenté en traits pointillés 64 d'une pale qui ne comprendrait pas de renfoncement concave. Cette diminution de l'angle d'incidence dans la zone du renfoncement démontre une augmentation du rendement propulsif de cette partie de la pale 34 par rapport à une pale sans renfoncement.

Sur la figure 7, au régime de décollage, on observe une diminution de l'angle d'incidence dans la zone du renfoncement par rapport à l'angle d'incidence représenté en traits pointillés 66 d'une pale sans renfoncement.

La figure 8 représente l'évolution du coefficient de finesse en abscisse sur la hauteur normalisée de la pale en ordonnée, au régime de croisière. Le coefficient de finesse d'une pale correspond au rapport de sa portance sur sa trainée aérodynamique sur la hauteur de la pale. Le coefficient de finesse F renseigne ainsi la capacité de propulsion locale de la pale en fonction de sa hauteur. Sur cette figure, on observe un pic 68 du coefficient de finesse dans la zone de la pale correspondant au renfoncement de la face d'extrados de la pale 34 démontrant ainsi que dans cette zone la capacité de propulsion de la pale 34 est améliorée.

## Revendications

1. Pale (34) destinée à être montée sur une hélice, s'étendant radialement suivant une hauteur depuis un pied de pale (38) jusqu'à une tête de pale (36), et comprenant un bord d'attaque (40) et un bord de fuite (42), ainsi qu'une face d'intrados et une face d'extrados, **caractérisée en ce que**, le long du bord d'attaque (40), l'angle (α) entre d'une part la direction radiale de la pale correspondant à la direction radiale de l'hélice sur laquelle la pale est destinée à être montée, et d'autre part une tangente au bord d'attaque, passe par un maximum local zₘₐₓ situé entre 60 et 80 % de la hauteur de pale (34) et **en ce que** la face d'extrados de la pale (34) comprend un renfoncement (54) à surface concave s'étendant axialement depuis le bord d'attaque (40) jusqu'au bord de fuite et localisé sur la hauteur de pale (34) entre le maximum local zₘₐₓ et la tête de pale (34), de manière à former une inversion de courbure de la pale (34) en direction radiale.

2. Pale selon la revendication 1, **caractérisée en ce que** le maximum local est situé à environ 75% de la hauteur de pale (34).

3. Pale selon l'une des revendications précédentes, **caractérisée en ce que** le renfoncement (54) a une largeur, mesurée selon la hauteur de pale (34), sensiblement constante.

4. Pale selon l'une des revendications précédentes, **caractérisée en ce que** le renfoncement (54) a une largeur, mesurée selon la hauteur de pale, qui est comprise entre 15 et 20% de la hauteur de pale (34).

5. Pale selon l'une des revendications précédentes, **caractérisée en ce que** le fond du renfoncement (54) est positionné entre 75 et 90 % de la hauteur de la pale (34).

6. Pale selon l'une des revendications précédentes, **caractérisée en ce que** le renfoncement (54) a une profondeur, mesurée dans une direction tangentielle, qui croit du bord d'attaque (40) vers le bord de fuite (42).

7. Hélice non carénée pour une turbomachine, **caractérisée en ce qu'**elle comprend une pluralité de pales (34) selon l'une des revendications précédentes.

8. Turbomachine, telle qu'un turbopropulseur ou un turboréacteur d'avion, **caractérisée en ce qu'**elle comprend au moins une hélice non carénée selon la revendication 7.

## Patentansprüche

1. Blatt (34), das dazu bestimmt ist, auf einen Rotor montiert zu werden, und sich radial in einer Höhe vom Fuß des Blatts (38) bis zum Kopf des Blatts (36) erstreckt und eine Vorderkante (40) und eine Hinterkante (42) sowie eine Blattunterseite und eine Blattoberseite aufweist, **dadurch gekennzeichnet dass** der Winkel (α) entlang der Vorderkante zum einen zwischen der radialen Richtung des Blatts, die der radialen Richtung des Rotors entspricht, auf dem das Blatt montiert werden soll, und zum anderen einer Tangente zur Vorderkante, durch einen örtlichen Maximalwert zₘₐₓ zwischen 60 und 80% der Blatthöhe (34) verläuft und dadurch, dass die Oberseite des Blatts (34) eine Vertiefung (54) mit konkaver Oberfläche aufweist, die sich axial von der Vorderkante (40) bis zur Hinterkante erstreckt und in der Höhe des Blatts (34) zwischen dem örtlichen Maximalwert zₘₐₓ und dem Kopf des Blatts (34) liegt, so dass es zu einer Umkehrung der Krümmung des Blatts (34) in radialer Richtung kommt.

2. Blatt nach Anspruch 1, **dadurch gekennzeichnet, dass** der lokale Maximalwert bei ungefähr 75% der Blatthöhe (34) liegt.

3. Blatt nach einem der vorhergehenden Ansprüche, **dadurch gekennzeichnet, dass** die Vertiefung (54) eine Breite hat, die der Höhe des Blatts entlang gemessen im Wesentlichen konstant ist.

4. Blatt nach einem der vorhergehenden Ansprüche, **dadurch gekennzeichnet, dass** die Vertiefung (54) eine in der Höhe des Blatts gemessene Breite hat, die zwischen 15 und 20% der Blatthöhe (34) beträgt.

5. Blatt nach einem der vorhergehenden Ansprüche, **dadurch gekennzeichnet, dass** der Boden der Vertiefung (54) bei 75 bis 90% der Blatthöhe (34) positioniert ist.

6. Blatt nach einem der vorhergehenden Ansprüche, **dadurch gekennzeichnet, dass** die Vertiefung (54) eine in Tangentialrichtung gemessene Tiefe hat, die von der Vorderkante (40) zur Hinterkante (42) hin zunimmt.

7. Nicht ummantelter Rotor für ein Turbinentriebwerk, **dadurch gekennzeichnet, dass** er eine Vielzahl an Blättern (34) nach einem der vorhergehenden Ansprüche enthält.

8. Turbinentriebwerk wie zum Beispiel ein Turbopropellertriebwerk oder ein Turbostrahltriebwerk eines Flugzeugs, **dadurch gekennzeichnet, dass** es mindestens einen nicht verkleideten Rotor nach Anspruch 7 umfasst.

## Claims

1. A blade (34) for mounting on a propeller, the blade extending radially in a height direction from a blade root (38) to a blade tip (36) and having a leading edge (40) and a trailing edge (42), together with a pressure side face and a suction side face, the blade being **characterized in that**, along the leading edge (40), the angle (α) between the radial direction of the blade corresponding to the radial direction of the propeller on which the blade is to be mounted and a tangent to the leading edge passes through a local maximum zₘₐₓ situated in the range 60% to 80% of the height of the blade (34), and **in that** the suction side face of the blade (34) includes an indentation (54) of concave surface extending axially from the leading edge (40) to the trailing edge and located at a height of the blade (34) between the local maximum zₘₐₓ and the blade tip (34), so as to form a reversal of curvature of the blade (34) in the radial direction.

2. A blade according to claim 1, **characterized in that** the local maximum is situated at about 75% of the height of the blade (34).

3. A blade according to either preceding claim, **characterized in that** the indentation (54) presents a width, measured along the height of the blade (34), that is substantially constant.

4. A blade according to any preceding claim, **characterized in that** the indentation (54) has a width, measured along the height of the blade, that lies in the range 15% to 20% of the height of the blade (34).

5. A blade according to any preceding claim, **characterized in that** the bottom of the indentation (54) lies in the range 75% to 90% of the height of the blade (34).

6. A blade according to any preceding claim, **characterized in that** the indentation (54) has a depth, measured in a tangential direction, that increases going from the leading edge (40) towards the trailing edge (42).

7. An unducted propeller for a turbine engine, the propeller being **characterized in that** it comprises a plurality of blades (34) according to any preceding claim.

8. A turbine engine, such as an airplane turbojet or turboprop, **characterized in that** it includes at least one unducted propeller according to claim 7.
